Europäisches Patentamt

European Patent Office

Office européen des brevets

(19)

(11) Veröffentlichungsnummer: **0 099 481**
**B1**

(12) **EUROPÄISCHE PATENTSCHRIFT**

(45) Veröffentlichungstag der Patentschrift:
**19.02.86**

(21) Anmeldenummer: **83106098.3**

(22) Anmeldetag: **22.06.83**

(51) Int. Cl.⁴: **B 65 G 19/22,** B 65 G 19/08

(54) **Trogförderkette.**

(30) Priorität: **22.07.82 CH 4480/82**

(43) Veröffentlichungstag der Anmeldung:
**01.02.84 Patentblatt 84/5**

(45) Bekanntmachung des Hinweises auf die Patenterteilung:
**19.02.86 Patentblatt 86/8**

(84) Benannte Vertragsstaaten:
**BE CH DE FR GB IT LI NL SE**

(56) Entgegenhaltungen:
**DE - C - 838 123**
**GB - A - 421 844**

(73) Patentinhaber: **Gebrüder Bühler AG, CH-9240 Uzwil (CH)**

(72) Erfinder: **Maag, Wilhelm, Rosenbühlstrasse 21,**
**CH-9242 Oberuzwil (CH)**
Erfinder: **Straub, Paul, Feldholzstrasse 12a,**
**CH-9242 Oberuzwil (CH)**

ACTORUM AG

## Beschreibung

Die Erfindung bezieht sich auf eine Trogförderkette aus einzelnen mittels Gelenkbolzen miteinander verbundenen Kettengliedern, an denen zu beiden Seiten je ein zumindest teilweise in einer zum Gelenkbolzen parallelen Ebene liegender Mitnehmer befestigt ist, die miteinander mit Hilfe eines die Kette überbrückenden Steges verbunden sind, der an zwei Lagerwangen je eine den Gelenkbolzen aufnehmende Bohrung aufweist.

Bei Trogförderketten liegt ein wesentliches Problem in der Abnützung des Troges selbst. Diese Abnützung ist dabei nicht einmal gleichmässig über die ganze Länge des Troges, sondern tritt an einzelnen Stellen, beispielsweise im Bereich von Krümmungen, verstärkt auf. Hat aber die Abnützung an diesen Stellen ein tolerierbares Mass überschritten, so muss wegen weniger abgenützten Stellen der ganze Trog ausgewechselt werden, was einerseits zu erheblichen Kosten und anderseits zu grösseren Stillstandszeiten führt.

Es ist deshalb schon vorgeschlagen worden (z. B. DE-PS Nr. 848029) den Trog aus einzelnen, miteinander verbindbaren Schüssen zusammenzusetzen, so dass bei Abnützung einer einzigen Stelle nur der davon betroffene Schuss ausgewechselt werden muss. Dadurch werden wohl Kosten und teilweise auch Zeit eingespart, das Grundproblem der Abnützung konnte man aber damit selbstverständlich nicht in den Griff bekommen.

Diesbezüglich waren Vorschläge zielführender, die auf eine zumindest teilweise Ausbildung des Troges aus reibungsarmen Kunststoff, wie Polyäthylen, abzielten (vgl. US-PS Nr. 3130708). Nun können aber die einzelnen Schüsse eines Troges schon aus Stabilitätsgründen nicht zu klein sein, so dass nach wie vor das Problem bestand, dass bei Abnützung einer einzigen Stelle ein verhältnismässig grosses Stück ausgewechselt werden musste, anderseits ist die Herstellung so grosser Stücke aus Kunststoff mit einfachen und billigen Verfahren, etwa durch Giessen, schon prinzipiell und erst recht bei Polyäthylen nicht möglich.

Für Riemenförderer ist schon vorgeschlagen worden, Gummimitnehmer auf den Riemen aufzuvulkanisieren (US-PS Nr. 3147850). Für Kettenförderer ist selbstverständlich diese Verbindungsart nicht möglich. Dagegen ist es aus der US-PS Nr. 2779454 bekannt, besondere Kettenglieder mit einander zugewandten Verstärkungsscheiben zu versehen, zwischen denen ein Kunststoffring eingespannt ist, der als Dichtungsring gegenüber der Trogwand dient. Da diese Dichtungsringe nur um ein geringes Mass über die sie haltenden Scheiben ragten, mussten sie nach verhältnismässig kurzer Betriebszeit wieder ausgewechselt werden, weil andernfalls die sie haltenden Scheiben über den Trog schliffen. Immerhin wurde dadurch ein Weg aufgezeigt, wie dem Abnützungsproblem durch relativ kleine, billig herstellbare und reibungsarme Kunststoffteile beizukommen wäre. In der Praxis hat sich dann am Markt eine Ausführung durchgesetzt, bei der die aus Metall bestehenden Mitnehmer Schuhe aus einem Kunststoff erhielten. Allerdings bedeutete dies einen zusätzlichen Aufwand und Kostenfaktor, weil nicht nur die üblichen, aus Metall bestehenden Mitnehmer, sondern darüber hinaus auch die auf ihnen aufsitzenden Kunststoffschuhe hergestellt und montiert werden mussten.

Neuerdings ist deshalb ein weiterer Versuch unternommen worden, das oben geschilderte Problem zu lösen. Es wurde nämlich eine Förder-Kette auf den Markt gebracht, bei der vollständig aus Kunststoffe bestehende seitliche Mitnehmer an den Gelenkgabeln jeweils mit Schrauben befestigt waren. Zu diesem Zwecke besassen die Mitnehmer einen scharf abgewinkelten, mit Bohrungen versehenen Fuss, durch die ein Paar von Befestigungsschrauben hindurchgesteckt und in Gewindelöchern der Kettengabel verschraubt wurden. Auch hier wurde wiederum Polyäthylen als Kunststoff verwendet. Diese Lösung hatte zwar neben der Reibungsarmut den Vorteil, das Gewicht der Kette entsprechend zu vermindern, doch wurden die Kettenglieder durch die Gewindelöcher gerade an einer Stelle geschwächt, an der sie besonders belastet sind, welche Schwächung letztlich nur wiederum durch eine Überdimensionierung der Kettenglieder ausgeglichen werden konnte, was den genannten Vorteil mehr als aufwog. Hinzu kommt, dass der stark abgewinkelte, verhältnismässig kurze Fuss bei Belastung verhältnismässig grosse Drehmomente und Spannungen aufnehmen musste, was in der Praxis leicht zu Brüchen führen konnte.

Ein Förderer der gleichen Gattung wie die Erfindung zeigt die DE-PS Nr. 838123. Seine Aufgabe war das Niederhalten der Mitnehmer beim Durchlaufen von nach unten gekrümmten Trögen, so dass sich die Mitnehmerkanten nicht vom Trogboden abheben, auch wenn sich die straff gespannte Kette von ihm abhebt. Quer zur Förderrichtung ist eine grosse relative Bewegung zwischen Mitnehmern und Kette möglich, was unerwünscht ist, weil sich das zu fördernde Produkt auf dem Trogboden unter der Kette sammelt und nicht weiter gefördert wird.

Der Erfindung liegt die Aufgabe zugrunde eine Trogförderkette zu schaffen, an deren Kettengliedern ein insbesondere aus Kunststoff bestehender Mitnehmer auf einfache Weise befestigt werden kann, ohne dass dadurch Nachteile für die Festigkeit der Kettenglieder und/oder der Mitnehmer entstehen. Erfindungsgemäss gelingt dies durch die Kombination der Merkmale,

a) dass eine Auflagefläche zur Anlage am Fördertrog vom Steg selbst gebildet ist, und

b) dass wenigstens eine sich seitlich von einer durch den Gelenkbolzen und quer zur Kettenrichtung verlaufenden Ebene erstreckende Stützfläche zur Aufnahme der auf die über den Gelenkbolzen befestigten Mitnehmer wirkenden Momente vorgesehen ist.

Die Erfindung geht dabei von der bekannten, aus Metall gebildeten Mitnehmerkonstruktion der DE-PS Nr. 838123 aus, bei der der Mitnehmer mit Hilfe des Gelenkbolzens der Kettenglieder selber befestigt war. Wenn aber nun die Auflagefläche vom Steg des Mitnehmers selbst gebildet ist und auf diesem Mitnehmer Momente wirken, so müssen Massnahmen getroffen werden, um zu verhindern, dass der Mitnehmer unter der Last um das Gelenk herumschwenkt und so seine Transportwirkung verliert. Dieser Gefahr wird durch das Merkmal b begegnet. Dabei ergeben sich — gleichgültig aus welchem Material die Mitnehmer hergestellt sind — die Vorteile einer Verteilung der in den Mitnehmern erzeugten Spannungen über eine grössere Länge und einer einfacheren Montage der Mitnehmer und der Kettenglieder in einem Arbeitsgang, ohne dass hierfür eine Schwächung der Kettenglieder durch zusätzliche Löcher bzw. Bohrungen erforderlich wäre. Besondere Vorteile ergeben sich aber bei der Herstellung der Mitnehmer aus Kunststoff, weil dadurch zusätzlich eine reibungsarme Konstruktion geschaffen wird, bei der trotz Aufliegens wenigstens eines Teiles des Mitnehmers bzw. des Steges am Fördertrog eine minimale Abnützung gesichert ist, insbesondere aber auch dann, wenn gemäss einer bevorzugten Weiterbildung der Erfindung der Steg und die Mitnehmer wenigstens einzelne über die gesamte Tragbreite verteilte Auflageflächen aufweisen und vorzugsweise Steg und Mitnehmer eine im wesentlichen durchgehend sich satt am Trog anschmiegende Auflagefläche besitzen. Bei dieser Ausbildung wird der Fördertrog sauber gehalten, ohne dass dadurch der Verschleiss erheblich vergrössert wird, weil sich die Beanspruchungen über eine grössere Auflagefläche verteilen. Gerade für Kunststoff bedeutet eine solche Ausbildung, dass die im Werkstoff selbst unter Last auftretenden Spannungen sich besser und über eine grössere Länge verteilen können und deshalb die Gefahr des Bruches geringer ist.

Wenn nun die Mitnehmer am Gelenkbolzen schwenkbar angelenkt sind, so wird eine dem Fördertrog zugekehrte Stützfläche vorgesehen. Besonders vorteilhaft aber ist es, wenn der Stegteil zwei das jeweilige Kettenglied an beiden Seiten umfassende und die Mitnehmer miteinander verbindende Stege aufweist, die auch die Stützflächen aufweisen, wobei der dem Fördertrog zugekehrte Steg die Momente über eine Stützfläche auf den Trog überträgt und/oder der dem Fördertrog abgewandte Steg sich mit seiner Stützfläche am Kettenglied abstützt, wobei zusätzlich eine festere Verbindung der beiden Mitnehmer gegeben ist.

Da Mitnehmer in grossen Stückzahlen hergestellt werden müssen, ist darauf besonders zu achten, dass die Einzelkosten so gering wie möglich gehalten werden. Wenn auch die bekannten Lösungen im allgemeinen die Verwendung von Polyäthylen vorgeschlagen haben, weil die Fachwelt einseitig nur die Lösung des Reibungsproblemes im Auge hatte, so hat sich überraschend herausgestellt, dass durch Wahl eines anderen Kunststoffes eine weitere Optimierung möglich ist. Wenn nämlich gemäss einer bevorzugten Ausbildung Mitnehmer und Steg samt Auflage- und Stützfläche aus Polyamid, vorzugsweise Guss-Polyamid, insbesondere aus PA6, bestehen, so ergeben sich nicht nur günstige Reibungsverhältnisse, vermindertes Kettengewicht und eine Verringerung der notwendigen Förderenergie, sondern es wird auch die Herstellbarkeit vereinfacht und verbilligt, weil Mitnehmer aus diesem Material durch Giessen hergestellt werden können. Dieses Verfahren eignet sich besonders für die Herstellung in grossen Serien und bewirkt eine erhebliche Verringerung der Gestehungskosten. Diese Vorteile ergeben sich bei Wahl dieses Kunststoffes auch unabhängig von der Art der Konstruktion der Mitnehmer, so dass die Herstellung von Mitnehmern, gleichgültig welcher Ausbildung und Form, aus Polyamid besonders günstig ist. Durch Beimengung von $MoS_2$ oder Graphit können die Gleiteigenschaften noch verbessert werden, wobei sich in letzterem Falle zusätzlich eine verbesserte Ladungsableitung statischer Elektrizität ergibt.

Weitere Einzelheiten ergeben sich anhand der nachfolgenden Beschreibung von in der Zeichnung schematisch dargestellten Ausführungsbeispielen.

Die Fig. 1 und 2 zeigen jeweils durch die vertikale Mittellinie, voneinander getrennt, zwei Ausführungsformen eines Mitnehmers mit jeweils der Hälfte des daran anschliessenden Steges zur Verbindung mit dem anderen Mitnehmer in Vorderansicht bzw. Draufsicht, wogegen,

die Fig. 3 und 4 die zugehörigen Seitenrisse darstellen. Anhand der

Fig. 5 und 6 wird eine weitere Ausführung erläutert.

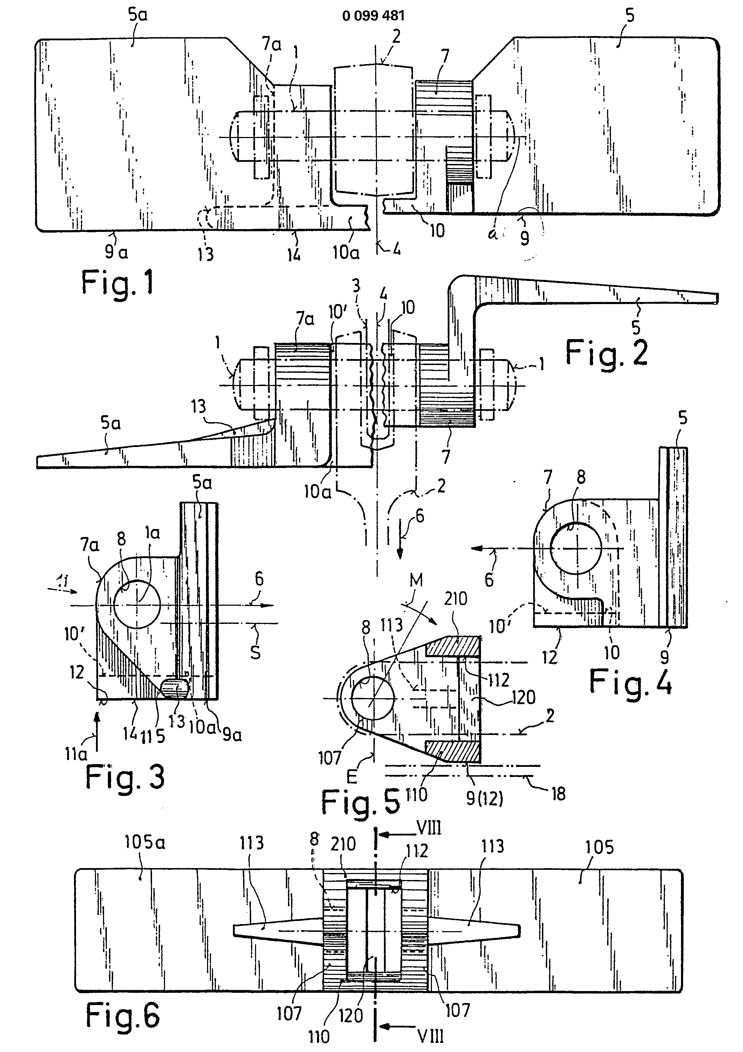

In den Fig. 1 und 2 sind strichpunktiert zwei durch einen Gelenkbolzen 1 miteinander verbundene, nur teilweise angedeutete Kettenglieder 2, 3 dargestellt. Dabei ist zu jeder Seite einer vertikalen Mittelebene 4 eine andere Ausführung eines Mitnehmers dargestellt. Bei der in den Fig. 1 und 2 rechts gezeigten Ausführung eilt ein Mitnehmerarm 5 bezogen auf die Förderrichtung (vgl. den Pfeil 6 in Fig. 2) und den Gelenkbolzen 1 nach, wogegen der an der linken Seite gezeigte Mitnehmer 5a voreilt. Dementsprechend ist eine mit dem Mitnehmerarm 5 verbundene Lagerwange 7 in Vorderansicht gezeichnet, wogegen die entsprechende Lagerwange 7a des Mitnehmerarmes 5a in Fig. 1 nur strichliert angedeutet ist. Jede Lagerwange 7, 7a besitzt eine Bohrung 8 (vgl. Fig. 3, 4) zur Aufnahme des Gelenkbolzens 1. Mit Hilfe dieses Gelenkbolzens 1 werden also nicht nur die Kettenglieder 2, 3 miteinander verbunden, sondern gleichzeitig auch der jeweilige Mitnehmer 5 bzw. 5a, so dass für die Befestigung dieser Mitnehmer 5, 5a keine zusätzliche Schwächung der Kettenglieder 2, 3 erforderlich ist.

Jeder der beiden Mitnehmerarme 5 bzw. 5a besitzt an seiner Unterseite eine sich an den im Querschnitt rechteckförmigen Trog eng anschmiegende Auflagefläche 9 bzw. 9a, die sich unterhalb der Kettenglieder 2, 3 in Form eines Verbindungssteges 10 bzw. 10a zum gegenüberliegenden jeweiligen Mitnehmerarm fortsetzt. Durch diese Konstruktion brauchen die bei Belastung an den Mitnehmerarmen 5, 5a auftretenden Drehmomente nicht bloss von den jeweiligen Lagerwangen 7, 7a aufgefangen zu werden, sondern der Steg 10 bzw. 10a übernimmt einen Teil der Spannungen, wobei diese verteilt und teilweise ausgeglichen werden.

Wie anhand der Fig. 3 gezeigt ist, wirken je nach Steilheit des Förderers beispielsweise Kräfte im Sinne des Pfeiles 11 auf den Mitnehmerarm 5a ein und bewirken dadurch, dass dieser an der Kette nur angelenkt ist, ein Drehmoment. Um nun zu verhindern, dass ein solches Drehmoment zum Kippen des Mitnehmerarmes 5a führt, ist relativ zu dem die Mitnehmerarme 5a verbindenden und in deren Ebene gelegenen Steg 10a in Kettenrichtung eine diese Drehmomente und die dadurch ausgelöste Druckkraft 11a aufnehmende Stützfläche 12 vorgesehen. Bei der Ausführung nach Fig. 3 wird diese Stützfläche 12 einerseits von der Unterfläche der Lagerwangen 7a gebildet, anderseits aber auch durch eine Verlängerung 10' des Steges 10. Durch diese Verlängerung 10' wird also die spezifische Flächenpressung geringer.

Um die Mitnehmer möglichst vielseitig anwenden zu können, ist es vorteilhaft, wenn die Achse 1a des Gelenkbolzens entweder in der Ebene des auf die Mitnehmerarme 5, 5a wirkenden Schwerpunktes der zu fördernden Last angeordnet ist oder (wie im Falle der Fig. 3) leicht über dieser Schwerpunktebene S liegt, die etwa in halber Höhe des Mitnehmerarmes 5a verläuft. Durch Anordnung der Achse 1a leicht über der Schwerpunktebene S wird gesichert, dass die aus den Kräften 11 resultierenden Drehmomente nicht allzu gross werden und somit die Abnützung durch die auf die Stützfläche 12 wirkenden Druckkräfte 11a gering gehalten wird. Anderseits soll die Achse 1a nicht zu hoch über der Schwerpunktebene S liegen, weil sich sonst die Gefahr des Kippens in der anderen Richtung ergibt. Ist dies aus der Konstruktion des jeweiligen Förderers zu erwarten, so kann es entsprechend Fig. 4 zweckmässig sein, die Stützfläche 12 in Transportrichtung (vgl. Pfeil 6) vor dem Mitnehmerarm 5 anzuordnen. In aller Regel wird aber die Ausbildung gemäss der linken Seite der Fig. 1 und 2 sowie entsprechend Fig. 3 die bevorzugte sein. Eine Anordnung der Gelenkachse in etwa ⅔ der Höhe der Mitnehmer hat sich als zweckmässig erwiesen.

Zur Verstärkung der Mitnehmerarme kann wenigstens eine Verstärkungsrippe 13 vorgesehen sein, die sich jedoch zweckmässig nicht über die gesamte Länge des Mitnehmerarmes 5a erstreckt, wie dies aus Fig. 2 ersichtlich ist. Dadurch wird dem Mitnehmerarm 5a vor allem an seinen Enden eine gewisse Elastizität gesichert. Demnach ist es vorteilhaft, wenn die Rippe 13 sich über höchstens die Hälfte seiner Länge, insbesondere über etwa 1 Drittel davon erstreckt. Diese Rippe 13 — gleichgültig wie weit sie sich über die Länge des Mitnehmerarmes 5a erstreckt — erfüllt eine weitere Funktion, wenn sie eine mit der Auflagefläche 9a bzw. auch mit der Stützfläche 12 fluchtende Rippenfläche 14 besitzt. Dadurch werden die auf Auflagebzw. Stützfläche wirkenden Kräfte auf eine noch grössere Fläche aufgeteilt. Im Gegensatz zur Darstellung der Fig. 3 kann es dabei zweckmässig sein, wenn die Vorderkante 115 dieser Rippe nicht abgerundet, sondern mit einer im Bereiche der Rippenfläche 14 liegenden Spitze keilartig ausgebildet ist. Dies gilt für den Fall, dass die Förderrichtung nicht entsprechend dem Pfeil 6 der Fig. 3, sondern entgegengesetzt verläuft. Es wird nämlich dann dadurch verhindert, dass das zu fördernde Material unter die Rippe 13 gelangt und den Mitnehmerarm 5a von seiner Auflagefläche 9a aufhebt. Dieses Problem lässt sich jedoch vermeiden, wenn die Rippe 13 in der Fig. 3 dargestellten Weise an der (bezogen auf die Förderrichtung gemäss Pfeil 6) Rückseite des Mitnehmerarmes 5a angeordnet ist.

Zur Verbesserung der Gleiteigenschaften ist es vorteilhaft, wenn wenigstens der Bereich der Flächen 9a, 12 und 14 des aus Kunststoff, insbesondere Polyamid und vorzugsweise Gusspolyamid, wie PA6, bestehenden Mitnehmerkörpers mit einem Gleitmittel, z. B. $MoS_2$ oder Graphit versetzt ist, wobei im letzteren Falle die statische Elektrizität verbessert abgeleitet wird. Gerade bei Herstellung durch Giessen wird es zur Vereinfachung des Herstellungsvorganges günstiger sein, dieses Gleitmittel im gesamten Kunststoffkörper zu verteilen, doch sind auch andere Herstellungsarten, wie Sintern, denkbar, bei denen eine Einbringung des Gleitmittels bloss an den mit dem Trog in Berührung kommenden Flächen (z. B. auch an den Aussenrändern der Mitnehmerarme 5b bzw. 5a) leichter möglich ist. Ebenso wäre es denkbar, derartige Schichten als gesonderte Teile über Dübel- oder Schwalbenschwanzverbindungen oder dgl. an den entsprechenden Flächen der Mitnehmerkörper anzubringen und diese Verbindung ggf. durch Nachsintern zu verfestigen. Es sei jedoch darauf hingewiesen, dass mit Rücksicht auf die Serienfertigung der Mitnehmer die Herstellung durch Giessen bevorzugt ist.

In den Fig. 5 und 6 werden für Teile gleicher Funktion dieselben Bezugszeichen wie in den vorigen Figuren, im allgemeinen jedoch mit einer Hunderterziffer versehen, verwendet. Deshalb kann bezüglich der Beschreibung einzelner Teile auf das oben Gesagte verwiesen werden.

Der hervorstechendste Unterschied gegenüber den oben beschriebenen Ausführungsbeispielen besteht darin, dass bei Befestigung der Mitnehmer 105, 105a am Kettenglied 2 (Fig. 5) mit Hilfe eines das Lagerauge 8 durchsetzenden Gelenkbolzens das im Betrieb auftretende Moment M nicht nur von der gegenüber einer Ebene E durch den Gelenkbolzen versetzte Auflagefläche 9 aufgenommen wird, die gleichzeitig auch die Rolle der Stützfläche 12 spielen kann, sondern dass neben dem diese Fläche 9 tragenden Steg 10 ein weiterer Steg 210 an der dem Fördertrog 18 abgewandten Seite angeordnet ist, der sich mit einer Stützfläche 112 unmittelbar am Kettenglied 2 abzustützen vermag. Je nach den Abständen wird also das Moment M entweder nur von einer der beiden Stützflächen 12, 112 oder von beiden aufgenommen.

In der Praxis erfolgt daher die Montage der Mitnehmer 105, 105a in der Weise, dass das Kettenglied 2 mit seinem schlanken Schaftteil in einen Schlitz 120 zwischen den beiden Stegen 110, 210 hineingesteckt wird, bis die Stege 110, 210 zusammen mit den beiden Lagerwangen 107 den Gabelteil des Kettengliedes umschliessen, wie dies aus der strichpunktierten Darstellung des Kettengliedes 2 in Fig. 5 ersichtlich ist. In dieser Stellung braucht zur endgültigen Befestigung der Mitnehmer 105, 105a lediglich der Gelenkbolzen durch die miteinander fluchtenden Lageraugen 8 der Lagerwangen 107 und das entsprechende Auge des Kettengliedes geschoben zu werden. Es ist ersichtlich, dass durch diese Ausbildung nicht nur eine verbesserte Aufnahme der auf die Mitnehmer wirkenden Momente erzielt wird, sondern dass überdies durch die doppelte Verbindung der Mitnehmerflügel 105, 105a und durch das Umfassen des Gabelteiles des Kettengliedes 2 eine wesentlich stabilere Konstruktion erreicht wird. Aufgrund dessen ist es auch nicht mehr erforderlich, die Rippe 113 zu Vergrösserung der Stützfläche in den unteren Bereich zu verlegen, sondern sie kann in der dargestellten Weise im Mittelbereich angeordnet sein. Gewünschtenfalls können jedoch auch zwei oder mehr Rippen über die Höhe der Mitnehmer verteilt sein, wovon dann ggf. eine dieser Rippen zur Vergrösserung der Stützfläche 12 dient.

Im Rahmen der Erfindung sind zahlreiche verschiedene Ausführungen denkbar; beispielsweise kann es für zweckmässig erachtet werden, die Auflagefläche 9 ausschliesslich im Bereiche des Steges 10 vorzusehen bzw. diese Auflägefläche im Bereiche der Mitnehmerarme jeweils zu unterbrechen. Eine solche Ausbildung kann besonders für Vertikalförderer in Frage kommen. Andernfalls ist eine sich satt am Trog anschmiegende Auflagefläche 9 schon deshalb erwünscht, weil dadurch der Trog sauberer gehalten werden kann. Ferner können zwei zueinander parallele Stege das Gelenk der Kette umschliessen.

## Patentansprüche

1. Trogförderkette aus einzelnen mittels Gelenkbolzen (1) miteinander verbundenen Kettengliedern (2, 3), an denen zu beiden Seiten je ein zumindest teilweise in einer zum Gelenkbolzen (1) parallelen Ebene liegender Mitnehmer (5, 5a; 105, 105a) befestigt ist, die durch einen die Kette überbrückenden Stegteil (10, 10a) verbunden sind, der an zwei Lagerwangen (7) je eine den Gelenkbolzen (1) aufnehmende Bohrung (8) aufweist, gekennzeichnet durch die Kombination der Merkmale,

a) dass eine Auflagefläche (9, 9a), zur Anlage am Fördertrog, am Stegteil (10, 10a) selbst ausgebildet ist, und

b) dass wenigstens eine sich seitlich von der durch den Gelenkbolzen (1) und quer zur Kettenrichtung verlaufenden Ebene (E) erstreckende Stützfläche (12, 112) zur Aufnahme der aus die über den Gelenkbolzen (1) befestigten Mitnehmer (5) wirkenden Momente vorgesehen ist.

2. Kette nach Anspruch 1, dadurch gekennzeichnet, dass die Mitnehmer (5) am Gelenkbolzen (1) schwenkbar angelenkt sind, und dass eine dem Fördertrog (18) zugekehrte Stützfläche (12) vorgesehen ist.

3. Kette nach Anspruch 1 oder 2, dadurch gekennzeichnet, dass der Stegteil (10) zwei das jeweilige Kettenglied (2) an beiden Seiten umfassende und die Mitnehmer (5) miteinander verbindende Stege (110, 210) aufweist, die auch die Stützflächen (12, 112) aufweisen.

4. Kette nach Anspruch 1, 2 oder 3, dadurch gekennzeichnet, dass der Steg (10) und die Mitnehmer (5) wenigstens einzelne über die gesamte Trogbreite verteilte Auflageflächen (9) aufweisen, vorzugsweise Steg (10) und Mitnehmer (5) eine im wesentlichen durchgehende, sich satt am Trog anschmiegende Auflagefläche (9) besitzen.

5. Kette nach einem der Ansprüche 1 bis 4, dadurch gekennzeichnet, dass zur Verringerung der auf die Stützfläche wirkenden Kräfte der Gelenkbolzen (1) in der Ebene des auf die Mitnehmer (5a) wirkenden Schwerpunktes der zu fördernden Last oder etwas darüber, z. B. etwa in zwei Dritteln der Höhe der Mitnehmer, angeordnet ist.

6. Kette nach einem der Ansprüche 1 bis 5, dadurch gekennzeichnet, dass der Steg (10) zur Bildung oder Verbreiterung der Stützfläche (12) eine in Kettenrichtung verlaufende Verlängerung (10') besitzt.

7. Kette nach einem der Ansprüche 1 bis 6, dadurch gekennzeichnet, dass Mitnehmer (5) und Steg (10) samt Auflage (9) und Stützfläche (12) aus Kunststoff, zweckmässig aus Polyamid, vorzugsweise Guss-Polyamid, insbesondere PA6, bestehen.

8. Kette nach Anspruch 7, dadurch gekennzeichnet, dass wenigstens im Bereiche der Auflage- (9) und Stützflächen (12) dem Kunststoff eine Gleit- und/oder ein ladungsableitendes Mittel, wie $MoS_2$ oder Graphit, beigemengt ist.

9. Kette nach Anspruch 7 oder 8, dadurch gekennzeichnet, dass wenigstens je eine Verstärkungsrippe (13) sich nur über einen Teil der Länge jedes Mitnehmers (5a), vorzugsweise über höchstens die Hälfte seiner Länge, insbesondere über etwa ein Drittel derselben, erstreckt.

10. Kette nach einem der Ansprüche 7 bis 9, dadurch gekennzeichnet, dass wenigstens eine zweckmässig an der der Förderrichtung abgewandten Rückseite eines Mitnehmerarmes (5a) angeordnete Verstärkungsrippe (13) eine mit der Auflage- (9a) und/oder Stützfläche (12) fluchtende Rippenfläche (14) besitzt.

## Claims

1. Trough conveyor chain comprising individual chain links (2, 3) which are connected to one another by means of hinge pins (1) and to both sides of which there is secured in each case a flight (5, 5a, 105, 105a) situated at least partly in a plane parallel to the hinge pin (1), said flights being connected by a web part (10, 10a) which bridges the chain and which has a bore (8), to receive the hinge pin (1), at each of two bearing cheeks (7), characterised by the combination of the features

a) that a bearing contact surface (9, 9a) for abutting on the conveyor trough is constructed on the web part (10, 10a) itself, and

b) that at least one supporting surface (12, 112) is provided for accepting the moments acting on the flights (5) secured by means of the hinge pin (1), and extends laterally from the plane (E) extending transversely to the chain direction and through the hinge pin (1).

2. Chain according to Claim 1, characterised in that the flights (5) are pivotably attached to the hinge pin (1), and that a supporting surface (12) is provided which faces towards the conveyor trough (18).

3. Chain according to Claim 1 or 2, characterised in that the web part (10) comprises two webs (110, 210) which extend about the respective chain link (2) at its two sides and which connect the flights (5) to one another and also comprise the supporting surfaces (12, 112).

4. Chain according to Claim 1, 2 or 3, characterised in that the web (10) and the flights (5) comprise at least some bearing contact surfaces (9) distributed over the entire trough width, and preferably web (10) and flights (5) comprise a substantially continuous bearing contact surface (9) which fits close against the trough.

5. Chain according to one of Claims 1 to 4, characterised in that to reduce the forces acting on the supporting surface the hinge pin (1) is arranged in the plane of the centre of gravity, acting on the flights (5), of the load which is being conveyed or somewhat thereabove e. g. substantially at two-thirds of the height of the flights.

6. Chain according to one of Claims 1 to 5, characterised in that the web (10) has an extension (10') disposed in the chain direction, for forming or widening the supporting surface (12).

7. Chain according to one of Claims 1 to 6, characterised in that flights (5) and web (10) and also bearing contact surface (9) and supporting surface (12) are made of synthetic plastic material, advantageously polyamide, preferably cast polyamide, especially PA6.

8. Chain according to Claim 7, characterised in that at least in the regions of the bearing contact surface (9) and supporting surface (12) a lubricant and/or a charge-dissipating substance, such as $MoS_2$ or graphite, is added to the synthetic plastic material.

9. Chain according to Claim 7 or 8, characterised in that at least one reinforcing rib (13) in each case extends only over a portion of the length of each flight (5a), preferably over at the most half of its length, especially over approximately one-third thereof.

10. Chain according to one of Claims 7 to 9, characterised in that at least one reinforcing rib (13) arranged advantageously at that rear side of a flight arm (5a) which is remote from the conveying direction comprises a rib surface (14) which is in alignment with the bearing contact surface (9a) and/or supporting surface (12).

## Revendications

1. Chaîne de convoyeur à raclettes dont les maillons individuels (2, 3) sont reliés les uns aux autres au moyen d'axes (1) d'articulation et sont munis d'une raclette (5, 5a; 105, 105a), respectivement, des deux côtés de chaque maillon, les raclettes étant disposées, au moins partiellement, dans un plan parallèle à l'axe d'articulation, et reliées entre elles par une traverse (10, 10a) passant au-dessus de la chaîne et comprenant deux pattes (7) de support pourvues chacune d'un perçage (8) destiné à recevoir l'axe (1) d'articulation, caractérisée par la combinaison des faits suivants:

a) un bord (9, 9a) d'appui servant de surface de contact avec le bac fait partie de la traverse (10, 10a), et

b) au moins une face (12, 112) d'appui, destinée à supporter les forces agissant sur les raclettes (5, 5a) fixées au moyen de l'axe (1) d'articulation, est disposée latéralement par rapport à un plan (E) qui passe par l'axe (1) d'articulation et qui est orienté perpendiculairement au sens de la chaîne.

2. Chaîne selon la revendication 1, caractérisée par le fait que les raclettes (5) sont articulées sur l'axe (1) d'articulation, et qu'une face d'appui (12) orientée face au bac (18) est prévue.

3. Chaîne selon l'une des revendications 1 ou 2, caractérisée par le fait que la traverse (10) comporte deux traverses (110, 210) encastrant, des deux côtés, le maillon correspondant (2), reliant les raclettes (5) l'une à l'autre, et comportant des faces (12, 112) d'appui.

4. Chaîne selon l'une des revendications 1, 2 ou 3, caractérisée par le fait que la traverse (10) et les raclettes (5) sont munies au moins d'un certain nombre de patins individuels (9) de contact répartis sur toute la largeur du bac, et que, de préférence, la traverse (10) et les raclettes (5) sont munies d'un bord (9) pratiquement ininterrompu de contact, qui épouse parfaitement la forme du bac.

5. Chaîne selon l'une des revendications 1 à 4, caractérisée par le fait que l'axe (1) d'articulation est disposé au niveau du centre de gravité de la charge à transporter, qui agit sur les raclettes (5a), ou légèrement au-dessus de ce niveau, par exemple à deux tiers environ de la hauteur des raclettes, afin de réduire les forces agissant sur la face d'appui.

6. Chaîne selon l'une des revendications 1 à 5, caractérisée par le fait que la traverse (10) est munie d'une prolongation (10') dans le sens de la chaîne, destinée à former ou à élargir la face (12) d'appui.

7. Chaîne selon l'une des revendications 1 à 6, caractérisée par le fait que la raclette (5) et la traverse (10), ainsi que le bord (9) de contact et la face (12) d'appui sont réalisés en matière plastique, avantageusement en polyamide, de préférence en polyamide moulé, et en particulier en PA6.

8. Chaîne selon la revendication 7, caractérisée par le fait qu'au moins dans la zone des bords (9) de contact et des faces (12) d'appui, la matière plastique contient un additif diminuant le frottement et/ou un additif conducteur de charge électrique, tels que du $MoS_2$ ou du graphite.

9. Chaîne selon l'une des revendications 7 ou 8, caractérisée par le fait que chaque raclette (5a) est équipée d'au moins une nervure (13) de renforcement s'étendant sur une partie de la longueur de la raclette et s'étendant de préférence, au maximum, jusqu'à la moitié, et en particulier jusqu'à un tiers de la longueur de la raclette.

10. Chaîne selon l'une des revendications 7 à 9, caractérisée par le fait qu'au moins une nervure (13) de renforcement, de préférence disposée sur le dos de la raclette (5a), qui est opposé au sens d'avance du convoyeur, est pourvue d'une face (14) de nervure alignée sur le bord (9a) de contact et/ou la face (12) d'appui.

0 099 481

Fig. 1

Fig. 2

Fig. 3

Fig. 4

Fig. 5

Fig. 6